# EUROPÄISCHE PATENTSCHRIFT

(11) **EP 3 670 775 B1**
(45) Veröffentlichungstag und Bekanntmachung des Hinweises auf die Patenterteilung: **26.01.2022**
(21) Anmeldenummer: 18212899.1
(22) Anmeldetag: 17.12.2018
(51) Int. Cl.: E04B 1/35, E04B 1/16, E04B 2/68, B33Y 10/00

(54) **VERFAHREN ZUR HERSTELLUNG EINER WAND EINES BAUWERKS AUS BETON SOWIE EINE WAND EINES BAUWERKS AUS BETON**
METHOD FOR PRODUCING A WALL OF A STRUCTURE MADE OF CONCRETE AND A WALL OF A CONCRETE STRUCTURE
PROCÉDÉ DE FABRICATION D'UNE PAROI D'UNE CONSTRUCTION EN BÉTON AINSI QUE PAROI D'UNE CONSTRUCTION EN BÉTON

(43) Veröffentlichungstag der Anmeldung: 24.06.2020
(73) Patentinhaber: Ed. Züblin Aktiengesellschaft, 70567 Stuttgart (DE)
(72) Erfinder: Weber, Peter, 70563 Stuttgart (DE); Kuhn, Alexander, 70599 Stuttgart (DE)
(74) Vertreter: Reinhardt, Annette

(56) Entgegenhaltungen:
- S. LIM ET AL: "Developments in construction-scale additive manufacturing processes", AUTOMATION IN CONSTRUCTION, Bd. 21, 1. Januar 2012 (2012-01-01), Seiten 262-268, XP055586873, AMSTERDAM, NL ISSN: 0926-5805, DOI: 10.1016/j.autcon.2011.06.010
- R.A. BUSWELL ET AL: "3D printing using concrete extrusion: A roadmap for research", CEMENT AND CONCRETE RESEARCH., Bd. 112, 1. Oktober 2018 (2018-10-01), Seiten 37-49, XP055587073, US ISSN: 0008-8846, DOI: 10.1016/j.cemconres.2018.05.006
- Viktor Mechtcherine ET AL: "3D-PRINTED STEEL REINFORCEMENT FOR DIGITAL CONCRETE CONSTRUCTION - MANUFACTURE, MECHANICAL PROPERTIES AND BOND BEHAVIOUR", , 1. Januar 2018 (2018-01-01), XP055587227, DOI: 10.13140/RG.2.2.33813.22248 Gefunden im Internet: URL:https://www.researchgate.net/publicati on/325448753_3D-printed_steel_reinforcemen t_for_digital_concrete_construction_-_Manu facture_mechanical_properties_and_bond_beh aviour/download
- BIRANCHI PANDA ET AL: "Additive manufacturing of geopolymer for sustainable built environment", JOURNAL OF CLEANER PRODUCTION, Bd. 167, 1. November 2017 (2017-11-01), Seiten 281-288, XP055586869, AMSTERDAM, NL ISSN: 0959-6526, DOI: 10.1016/j.jclepro.2017.08.165
- BOS FREEK ET AL: "3D Printing Concrete with Reinforcement", HIGH TECH CONCRETE: WHERE TECHNOLOGY AND ENGINEERING MEET: PROCEEDINGS OF THE 2017 FIB SYMPOSIUM, HELD IN MAASTRICHT, THE NETHERLANDS, JUNE 12-14, 2017, SPRINGER INTERNATIONAL PUBLISHING, CHAM , 12. Juni 2017 (2017-06-12), Seiten 2484-2493, XP009513013, DOI: 10.1007/978-3-319-59471-2_283 ISBN: 978-3-319-59471-2 Gefunden im Internet: URL:https://link.springer.com/chapter/10.1 007/978-3-319-59471-2_283 [gefunden am 2017-08-06]

## Beschreibung

Die Erfindung betrifft ein Verfahren zur Herstellung einer Wand eines Bauwerks aus Beton sowie eine Wand eines Bauwerks aus Beton.

Es ist bekannt, Wände durch Auftragen von Beton in übereinander liegenden Schichten herzustellen. Dieses Herstellverfahren wird auch als 3D-Druck bezeichnet. Die Betonschichten werden nacheinander über einen sich in Längsrichtung über die Wand bewegenden Druckkopf durch Ausgießen von Beton auf die oberste Schicht des schon hergestellten Abschnitts der Wand hergestellt. Dabei wird nicht, wie in konventionellen Verfahren, zunächst eine Schalung hergestellt, in die der flüssige Beton für einen bestimmten Wandabschnitt gegossen wird, sondern der Beton wird ohne seitliche Schalung als Schicht mit vergleichsweise geringer Höhe aufgebracht. Da sich die einzelnen Schichten des Betons zwischen dem Auftragen und dem Erstarren aufgrund des Eigengewichts des Betons nach außen wölben, entsteht eine wellige Struktur an der Außenseite der Wand.

Bei konventionell hergestellten Wänden wird vor dem Einbringen des Betons in die Schalung die Bewehrung beispielsweise in Form von Bewehrungsstäben, Bewehrungsmatten oder dergleichen eingebracht. Anschließend wird die Schalung mit Beton verfüllt. Dabei werden die Bewehrungen im Beton eingegossen. Bei einer im 3D-Druckverfahren hergestellten Wand muss eine Bewegung des Druckkopfs über die Wand zum Auftragen der einzelnen Schichten möglich sein. Die vertikale Bewehrung darf die Bewegung des Druckkopfs über die Wand nicht behindern.

Um in 3D-gedruckten Wänden eine Bewehrung herstellen zu können, sind unterschiedliche Verfahren bereits bekannt. Aus der CN 106193368 A ist es bekannt, die außen liegenden Wandabschnitte in 3D-Druckverfahren herzustellen, anschließend horizontale und vertikale Bewehrungen zwischen den im 3D-Druck hergestellten Wandabschnitten einzubringen und den Zwischenraum zwischen den Wandabschnitten anschließend mit Beton zu verfüllen. Um den Druckkopf über die vertikale Bewehrung führen zu können, ist es auch bekannt, den Druckkopf mit zwei Zuführöffnungen auszubilden, die jeweils auf einer Seite der Bewehrung Beton auftragen. Die Gestaltung des Druckkopfs ist daher vergleichsweise aufwendig, und die Länge der vertikalen Bewehrung ist durch die Konstruktion des Druckkopfes begrenzt.

Aus dem Zeitschriftenartikel S. LIM ET AL: "Developments in construction-scale additive manufacturing processes", AUTOMATION IN CONSTRUCTION, Bd. 21, 1. Januar 2012, S. 262 bis 268, geht ein Verfahren zur Herstellung eines Betonbauteils hervor, bei dem zunächst eine Wand durch Auftragen von Beton in übereinanderliegenden Schichten hergestellt und danach mit Bewehrung versehen wird. Die Bewehrung kann in Hohlräume des Bauteils eingefügt, verspannt und anschließend einbetoniert werden.

Ein entsprechendes Verfahren geht auch aus dem Zeitschriftenartikel R. A. BUSWELL ET AL: "3D printing using concrete extrusion: A roadmap for research", CEMENT AND CONCRETE RESEARCH, Bd. 112, 1. Oktober 2018, S. 37-49 hervor. Aus diesem Zeitschriftenartikel geht auch hervor, die Außenhülle der Wand durch übereinanderliegende Schichten von Beton aufzutragen und die Bewehrung in dem Zwischenraum anzuordnen. Auch hier ist eine Fixierung von Bewehrung durch Einbetonieren vorgesehen.

Der Erfindung liegt die Aufgabe zugrunde, ein Verfahren zur Herstellung einer Wand eines Bauwerks aus Beton anzugeben, mit dem die Wand einfach und wirtschaftlich hergestellt werden kann. Eine weitere Aufgabe der Erfindung besteht darin, eine einfach und wirtschaftlich herstellbare Wand anzugeben.

Diese Aufgabe wird bezüglich des Verfahrens durch ein Verfahren mit den Merkmalen des Anspruchs 1 gelöst. Bezüglich der Wand wird die Aufgabe durch eine Wand mit den Merkmalen des Anspruchs 9 gelöst.

Es ist vorgesehen, dass zumindest ein Bewehrungsstab in die Wand eingebracht wird, wobei der Bewehrungsstab zumindest einen Teil der Schichten durchragt. Der Teil der Schichten, in die der Bewehrungsstab eingebracht wird, ist beim Einbringen des Bewehrungsstabs zumindest teilweise erstarrt. Das Einbringen des Bewehrungsstabs nach zumindest teilweisem Erstarren der Schichten vereinfacht die Herstellung der Wand in dem 3D-Druckverfahren, da der Druckkopf ungehindert von vertikaler Bewehrung über die oberste Schicht der Wand bewegt werden kann. Die Schichten können zunächst in einer der Länge des Bewehrungsstabs entsprechenden Höhe aufgetragen werden. Dadurch, dass der Bewehrungsstab eingebracht wird, wenn zumindest ein Teil der Schichten zumindest teilweise erstarrt ist, besteht für das Auftragen der Schichten keine Eile, und es können eine Vielzahl von Schichten aufgetragen werden, bevor der Bewehrungsstab eingebracht wird. Dadurch kann ein Bewehrungsstab großer Länge zum Einsatz kommen. Der mindestens eine Bewehrungsstab kann eine Vielzahl von Schichten durchragen.

Die Schichten erstrecken sich über mindestens die Hälfte der Länge der Wand von einer zur anderen Längsseite der Wand. Die im 3D-Druckverfahren aufgetragenen Schichten bilden demnach nicht lediglich eine Schalung für in herkömmlicher Weise gegossenen Beton.

Bevorzugt sind ein oder mehrere Bewehrungsstäbe so angeordnet, dass alle Schichten der Wand von zumindest einem Bewehrungsstab durchragt sind.

Der mindestens eine Bewehrungsstab wird vorteilhaft in einem Winkel von weniger als 30°, insbesondere weniger als 10° zur Vertikalen eingebracht. Bevorzugt wird der mindestens eine Bewehrungsstab im Rahmen der üblichen Fertigungstoleranzen in vertikaler Richtung eingebracht. Bei dem Bewehrungsstab handelt es sich demnach um eine vertikale Bewehrung. Es kann vorgesehen sein, den Bewehrungsstab mit Vorspannung als Spannbewehrung vorzusehen. Bevorzugt ist eine Bewehrung ohne Vorspannung vorgesehen.

Das schichtweise Aufbringen des Betons erfolgt vorzugsweise in einer Längsrichtung der Wand. Die Wand weist mindestens eine Querseite auf, die quer zu der Längsrichtung verläuft. Vorteilhaft sind mehrere Bewehrungsstäbe in unterschiedlichem horizontalem Abstand zueinander in der Wand angeordnet. Die Bewehrungsstäbe sind dabei vorzugsweise benachbart zu den Querseiten und benachbart zu Wandöffnungen wie Türöffnungen oder Fensteröffnungen mit geringem Abstand zueinander angeordnet. In Bereichen, die zu den Querseiten oder zu Wandöffnungen einen großen Abstand aufweisen, kann die vertikale Bewehrung entfallen oder die vertikalen Bewehrungsstäbe können mit großem Abstand zueinander angeordnet werden. Die Bewehrung ist demnach angepasst an die auftretenden Belastungen in der Wand angeordnet. Die Bewehrung ist vorteilhaft in Form einer Zonenbewehrung vorgesehen. Zonenbewehrung ist dabei Bewehrung, die lediglich lokal oder bereichsweise in einem ansonsten unbewehrten Bauteil angeordnet ist.

Die einzelnen Schichten der Wand besitzen eine vergleichsweise geringe Dicke. Vorteilhaft wird jede Schicht mit einer Dicke von 2 cm bis 10 cm hergestellt. Bevorzugt ist die Dicke aller Schichten der Wand dabei im Rahmen der Fertigungstoleranzen gleich. Die Schichten werden insbesondere mit einer Dicke von etwa 4 cm bis etwa 8 cm, bevorzugt mit einer Dicke von etwa 5 cm hergestellt.

Vorteilhaft wird der mindestens eine Bewehrungsstab nicht unmittelbar in den Beton eingebracht, sondern nachträglich in einen die Schichten der Wand durchragenden Kanal. Es ist bekannt, in Betonwänden Leerrohre vorzusehen, beispielsweise zum nachträglichen Verlegen von Kabeln oder dergleichen. Derartige Leerrohre sind jedoch an ihrer Innenseite glatt und können daher Kräfte in ihrer Längsrichtung nicht aufnehmen. Um eine Kraftübertragung von dem Bewehrungsstab in die Schichten der Wand zu ermöglichen, ist vorgesehen, dass übereinanderliegende Bereiche übereinanderliegender Schichten der Wand beim Auftragen des Betons derart ausgespart werden, dass ein die Schichten durchragender Kanal entsteht. Der Kanal ist bevorzugt über zumindest einen Teil seiner Länge an seinem Umfang geschlossen. Beim Auftragen einer Schicht wölbt sich der Beton aufgrund seines Eigengewichts an den Außenseiten der Wand nach außen. Die Außenseite einer Wand, die durch schichtweises Aufbringen von Beton hergestellt wurde, weist daher eine wellige Kontur auf. Dadurch, dass auch der Kanal durch Aussparen von Beton innerhalb der Schichten hergestellt wird, ist auch die Oberfläche des Kanals wellig. Nach der Herstellung mindestens eines Teilabschnitts der Wand wird zumindest ein Bewehrungsstab in den Kanal eingebracht und der zwischen der Wandung des Kanals und dem mindestens einen Bewehrungsstab gebildete freie Querschnitt mit Verfüllmaterial verfüllt. Aufgrund der Welligkeit der Oberfläche des Kanals wird eine gute Verzahnung des Verfüllmaterials mit den Schichten der Wand erreicht. Selbst bei geringer Welligkeit der Oberfläche des Kanals ergibt sich aufgrund des direkten Kontakts des Verfüllmaterials mit dem Beton der Wand eine gute Verbindung zwischen Beton der Wand und Verfüllmaterial. Das Aussparen eines Bereichs der Schichten bei der Herstellung der Schicht ist einfach automatisiert möglich, so dass die Herstellung des Kanals bei der Herstellung der Wand auf einfache Weise und in einem automatisierten Verfahren erfolgen kann.

Der Bewehrungsstab weist vorteilhaft eine in üblicher Weise mit Erhöhungen versehene Oberfläche auf, so dass eine gute Verzahnung des Bewehrungsstabs mit dem Verfüllmaterial erreicht wird. Dadurch können vergleichsweise große Kräfte zwischen den Schichten der Wand und dem mindestens einen Bewehrungsstab übertragen werden.

Als Verfüllmaterial wird ein anderes Material verwendet als für die Schichten der Wand. Wenn mehrere Bewehrungsstäbe über die Höhe der Wand verteilt angeordnet werden müssen, ist vorteilhaft vorgesehen, die Bewehrungsstäbe mit Überlappungsstoß anzuordnen. Die Länge der Überlappung ist abhängig von der Festigkeit des Verfüllmaterials. Wird für das Verfüllmaterial ein Material mit sehr hoher Festigkeit verwendet, so kann die benötigte Überlappungslänge und damit die benötigte Menge an Bewehrungsstahl reduziert werden. Alternativ können die Bewehrungsstäbe auch miteinander verbunden, insbesondere miteinander verschraubt werden.

Zum Einbringen des Verfüllmaterials ist vorteilhaft vorgesehen, dass eine Verbindung von dem Kanal zur Außenseite der Wand hergestellt wird und über die Verbindung das Verfüllmaterial in den Kanal eingepresst wird. Um zu vermeiden, dass Lufteinschlüsse in dem Kanal verbleiben, ist bevorzugt vorgesehen, dass die Verbindung vergleichsweise weit unten in der Wand eingebracht und das Verfüllmaterial von unten in den Kanal eingepresst wird. Bevorzugt wird die Verbindung in dem Bereich unterhalb der zehnten Schicht der Wand, insbesondere unterhalb der vierten Schicht der Wand, hergestellt. Eine einfache Gestaltung ergibt sich, wenn zur Herstellung der Verbindung bei der Herstellung der Wand ein von dem Kanal zur Außenseite der Wand führendes Rohr mindestens teilweise, insbesondere etwa bis zur Hälfte in eine Schicht eingelegt und anschließend eine weitere Schicht aufgebracht wird, die das Rohr zumindest teilweise bedeckt. Dadurch kann auf einfache Weise eine Verbindung in den Kanal hergestellt werden, über die nach dem Einbringen des mindestens einen Bewehrungsstabs der verbleibende freie Raum im Kanal mit Verfüllmaterial verfüllt werden kann. Alternativ kann die Verbindung auch auf andere Weise, beispielsweise durch nachträgliches Einbringen einer Verbindung, beispielsweise durch Bohren eines Kanals, oder durch Aussparen der Verbindung beim Auftragen des Betons der entsprechenden Schichten hergestellt werden. Vorteilhaft sind alle in dem Kanal anzuordnenden Bewehrungsstäbe in dem Kanal angeordnet, bevor Verfüllmaterial in den Kanal zugeführt wird. Es kann jedoch auch vorgesehen sein, das Verfüllmaterial abschnittsweise in den Kanal einzubringen. Hierzu sind vorteilhaft mehrere Verbindungen über die Länge des Kanals verteilt angeordnet. Alternativ kann auch vorgesehen sein, dass das Verfüllmaterial von oben in den Kanal eingefüllt wird.

Bei einer Wand eines Bauwerks aus Beton, die aus übereinander angeordneten Schichten von Beton aufgebaut ist, ist vorgesehen, dass in der Wand mindestens ein Kanal verläuft, der mehrere Schichten durchquert und in dem mindestens ein Bewehrungsstab angeordnet ist, wobei der Kanal mit Verfüllmaterial gefüllt ist, dessen Zusammensetzung sich von der des Betons der Schichten unterscheidet. Eine solche Wand kann auf einfache Weise in einem 3D-Druckverfahren hergestellt werden, wobei der Kanal bei der Herstellung der Wand ausgespart, anschließend die Bewehrung eingebracht und erst dann der Kanal mit Verfüllmaterial verfüllt wird. Dadurch kann auf einfache Weise auch bei einer in einem 3D-Druckverfahren hergestellten Wand aus Beton eine vertikale Bewehrung eingebracht werden.

Bevorzugt weist das Material des Verfüllmaterials eine höhere Festigkeit auf als der Beton der Schichten. Dies ist insbesondere bei Anordnung mehrerer Bewehrungsstäbe übereinander, die sich in einem Überlappungsbereich überlappen und so einen Überlappungsstoß bilden, vorteilhaft. Die benötigte Überlappungslänge ist unter anderem abhängig von der Festigkeit des Verfüllmaterials. Eine hohe Festigkeit des Verfüllmaterials verringert die benötigte Überlappungslänge. Bevorzugt weist das Verfüllmaterial mindestens die Festigkeitsklasse C60, insbesondere mindestens die Festigkeitsklasse C75 auf. Das Verfüllmaterial ist ein Mörtel. Aufgrund des geringeren Größtkorndurchmessers des Mörtels im Vergleich zu Beton kann der Durchmesser des Kanals vergleichsweise klein ausgebildet werden. Dadurch wird die Menge des bei der Herstellung der Wand benötigten Verfüllmaterials verringert. Bevorzugt sind in dem Kanal mindestens zwei Bewehrungsstäbe angeordnet. Bevorzugt überlappen sich die Bewehrungsstäbe in Höhenrichtung der Wand über einen Teilabschnitt ihrer Länge. Auch eine Verbindung der Bewehrungsstäbe, beispielsweise eine Schraubverbindung, kann jedoch vorteilhaft sein.

Der Kanal ist bevorzugt mit vergleichsweise geringem Durchmesser ausgebildet. Die Erstreckung des Kanals in Längsrichtung der Wand ist bevorzugt kleiner als das Doppelte der Erstreckung des Kanals in Querrichtung der Wand. Die Erstreckung des Kanals in Querrichtung ist durch die geringste herzustellende Wandstärke begrenzt. Vorzugsweise besitzt der Kanal zu den Längsseiten der Wand einen Abstand von mindestens 5 cm.

Ein Ausführungsbeispiel der Erfindung wird nachfolgend anhand der Zeichnung erläutert. Es zeigen:
Fig. 1 eine schematische Darstellung einer Wand eines Bauwerks,
Fig. 2 eine schematische Darstellung der Wand aus Fig. 1 im Längsschnitt, wobei die Schichten ohne Schraffur dargestellt sind und wobei schematisch die Lage eines weiteren Bewehrungsstabs gezeigt ist,
Fig. 3 die Einzelheit III aus Fig. 2 in vergrößerter Darstellung,
Fig. 4 die Einzelheit IV aus Fig. 2 in vergrößerter Darstellung,
Fig. 5 eine ausschnittsweise schematische Schnittdarstellung durch den Kanal.

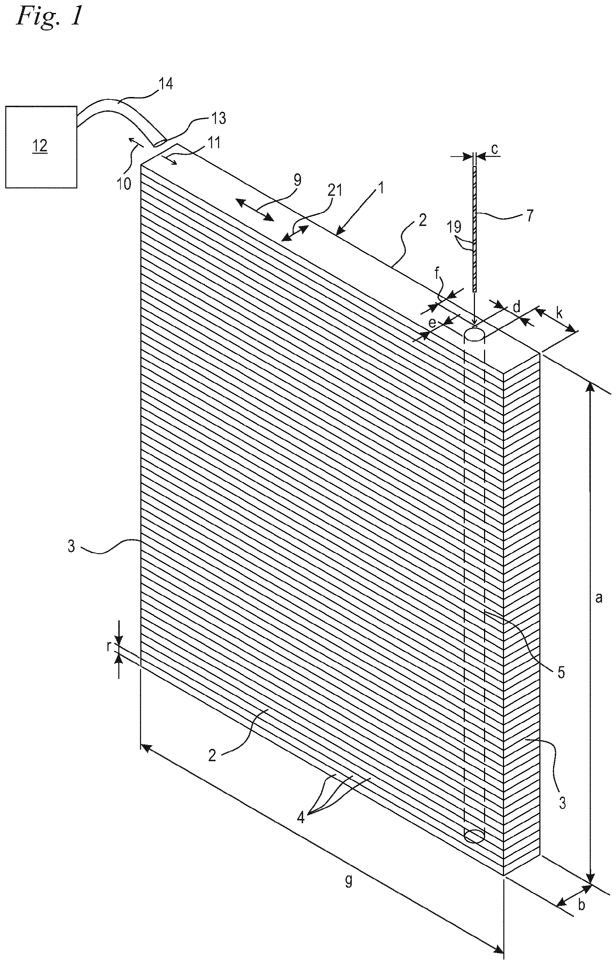

Fig. 1 zeigt schematisch eine Wand 1 eines Bauwerks. Die Wand 1 ist aus einer Vielzahl übereinanderliegender Schichten 4 von Beton hergestellt. Zur Herstellung der Wand 1 kommt eine schematisch dargestellte Betonauftragseinrichtung 12 zum Einsatz, die über eine Bewegungs- und Zuführeinrichtung 14 mit einer Betonaustrittsöffnung 13 verbunden ist. Die Betonauftragseinrichtung 12 ist eine sogenannte 3D-Druckeinrichtung für Beton. Die Betonaustrittsöffnung 13 wird auch als Druckkopf bezeichnet. Die konstruktive Gestaltung kann eine beliebige geeignete Gestaltung sein. Im Stand der Technik sind beispielsweise Betonauftragseinrichtungen 12 in Form von Portalanordnungen oder mit einem Roboterarm bekannt.

Die Wand 1 besitzt zwei einander gegenüberliegende Längsseiten 2, die parallel zu einer Längsrichtung 9 der Wand 1 verlaufen. Im Ausführungsbeispiel ist die Wand 1 eben. Die Wand 1 kann jedoch auch eine geschwungene, abgewinkelte oder in sonstiger Weise von der geraden Form abweichende Form aufweisen. Die Längsrichtung 9 ist die Richtung, in der die Betonaustrittsöffnung 13 zur Herstellung einer Schicht 4 über die Wand 1 zu bewegen ist. Die Wand 1 weist zwei Querseiten 3 auf, die sich jeweils quer, insbesondere senkrecht zur Längsrichtung 9 in einer Querrichtung 21 erstrecken.

Die Betonaustrittsöffnung 13 kann mittels der Bewegungs- und Zuführeinrichtung 14 in einer Auftragsrichtung 10 und/ oder einer entgegengesetzt gerichteten Auftragsrichtung 11 zum Auftragen einer Schicht 4 über die Oberseite des bisher hergestellten Wandabschnitts der Wand 1 bewegt werden. Die Auftragsrichtungen 10 und 11 verlaufen in Längsrichtung 9 der Wand 1. Auch ein Auftragen von Beton in Querrichtung 21 kann vorgesehen sein.

Die Wand 1 besitzt eine Höhe a, die üblicherweise mehrere Meter beträgt. Die Höhe a kann beispielsweise die Raumhöhe eines Bauwerks, von dem die Wand 1 einen Teil bildet, sein. Die Wand 1 besitzt eine Breite b, die deutlich geringer als die Höhe a ist. Die Breite b kann beispielsweise im Bereich von 20 cm bis 50 cm liegen. Die Wand 1 besitzt eine Länge g, die in Längsrichtung 9 gemessen ist. Die Wand 1 besteht aus einer Vielzahl von übereinanderliegenden Schichten 4. Jede der Schichten weist eine Dicke r auf, die beispielsweise 2 cm bis 10 cm, insbesondere 4 cm bis 8 cm beträgt. Besonders bevorzugt ist eine Dicke r von etwa 5 cm. Die Wand 1 wird ohne Verwendung einer Schalung an den Längsseiten 2 hergestellt. Die Schichten 4 erstrecken sich über mindestens die Hälfte, vorteilhaft über mindestens 75% der Länge g der Wand 1 über die gesamte Breite b der Wand 1 von der einen Längsseite 2 zur gegenüberliegenden Längsseite 2. Die Dicke r aller Schichten 4 ist so bemessen, dass der Beton der jeweils obersten Schicht 4 nicht seitlich von der darunterliegenden Schicht 4 herunterläuft. Die einzelnen Schichten wölben sich jedoch aufgrund des Eigengewichts des Betons jeweils nach außen, so dass die Außenseite der Wand 1 nicht wie in Fig. 1 schematisiert dargestellt eine glatte Oberfläche, sondern eine wellige Oberfläche ist.

Bei konventionell hergestellten Wänden wird zunächst eine Schalung hergestellt, und in der Schalung werden horizontale und vertikale Bewehrungen, beispielsweise Bewehrungsmatten oder dergleichen angeordnet. Anschließend wird die Schalung mit Beton ausgegossen. Wie Fig. 1 zeigt, erstreckt sich die Betonaustrittsöffnung 13 an der Oberseite der Wand 1. Eine so gestaltete Betonaustrittsöffnung 13 kann sich nicht ohne weiteres über einen über die oberste Schicht 4 ragenden Bewehrungsstab 7 bewegen. Daher ist bei der in Fig. 1 dargestellten Wand 1 vorgesehen, bei der Herstellung der Schichten 4 einen Kanal 5 herzustellen. Der Kanal 5 wird vorteilhaft dadurch hergestellt, dass in dem Bereich, in dem der Kanal 5 hergestellt werden soll, kein Beton aufgetragen wird, so dass ein Loch in der jeweiligen Schicht 4 entsteht. Die ausgesparten Bereiche werden übereinanderliegend hergestellt, so dass ein durchgehender Kanal 5 im Inneren der Wand 1 entsteht. Der Kanal 5 ist im Ausführungsbeispiel an seinem Umfang vollständig geschlossen. Es kann jedoch auch vorteilhaft sein, dass der Kanal 5 an seinem Umfang teilweise offen ist.

Es kann vorgesehen sein, dass die Wand 1 mit mehreren Kanälen 5 hergestellt wird. Zumindest ein Kanal 5 ist bevorzugt im Bereich einer Querseite 3 angeordnet. Der Kanal 5 weist zur Querseite 3 einen Abstand k auf. Insbesondere an den Querseiten 3 der Wand 1 ist mit Zugbelastungen zu rechnen. Vorzugsweise werden nur in den Bereichen, in denen mit Zugbelastungen zu rechnen ist, Bewehrungsstäbe 7 angeordnet. Ansonsten ist die Wand 1 vorzugsweise unbewehrt. Die Wand 1 weist demnach eine Zonenbewehrung auf. Die Bewehrungsstäbe 7, 8 weisen, wie Fig. 1 zeigt, Rippen 19 auf.

Der Kanal 5 weist einen freien Innendurchmesser d auf, der deutlich größer als der Durchmesser c des Bewehrungsstabs 7 ist. Nach der Herstellung zumindest eines Teilabschnitts der Wand 4 wird der Bewehrungsstab 7 in den Kanal 5 eingebracht. Dabei ist der Beton der Wand 1 bereits mindestens teilweise erstarrt. Insbesondere sind die unteren Schichten des Teilabschnitts der Wand 4 bereits teilweise erstarrt. Es ist demnach vorgesehen, die Bewehrung nach zumindest teilweisem Erstarren des Betons einzubringen und nicht, wie bei der Herstellung einer Wand mit herkömmlichen Verfahren, mittels einer Schalung, die Bewehrung vor dem Zuführen des Betons in der Schalung anzuordnen.

Im Ausführungsbeispiel ist der Durchmesser d des Kanals 5 deutlich kleiner als die Breite b. Vorteilhaft beträgt der Durchmesser d höchstens 80 % der Breite b, bevorzugt weniger als 70 % der Breite b. Der Kanal 5 besitzt zu einer Längsseite 2 einen Abstand e und zur anderen Längsseite 2 einen Abstand f. Die Abstände e und f können gleich groß sein. Auch unterschiedlich große Abstände e und f können jedoch vorteilhaft sein. Die Abstände e und f betragen vorteilhaft mindestens 5 cm.

Im Ausführungsbeispiel ist der Kanal 5 mit im Rahmen der Fertigungstoleranzen kreisförmigem Durchmesser d ausgebildet. Auch ein anderer Querschnitt des Kanals 5 kann jedoch vorteilhaft sein. Die Erstreckung des Kanals 5 in Längsrichtung 9 der Wand 1 ist vorteilhaft kleiner als das Doppelte der Erstreckung des Kanals 5 in Querrichtung 21 der Wand 1.

Im Ausführungsbeispiel verläuft der Kanal 5 vertikal. Auch eine leicht schräge Anordnung des Kanals 5 und damit auch des Bewehrungsstabs 7 kann jedoch vorteilhaft sein. Der Bewehrungsstab 7 ist vorteilhaft in einem Winkel von weniger als 30 %, insbesondere in einem Winkel von weniger als 10 % zur Vertikalen angeordnet. Bevorzugt ist der Bewehrungsstab 7 im Rahmen der Fertigungstoleranzen vertikal angeordnet.

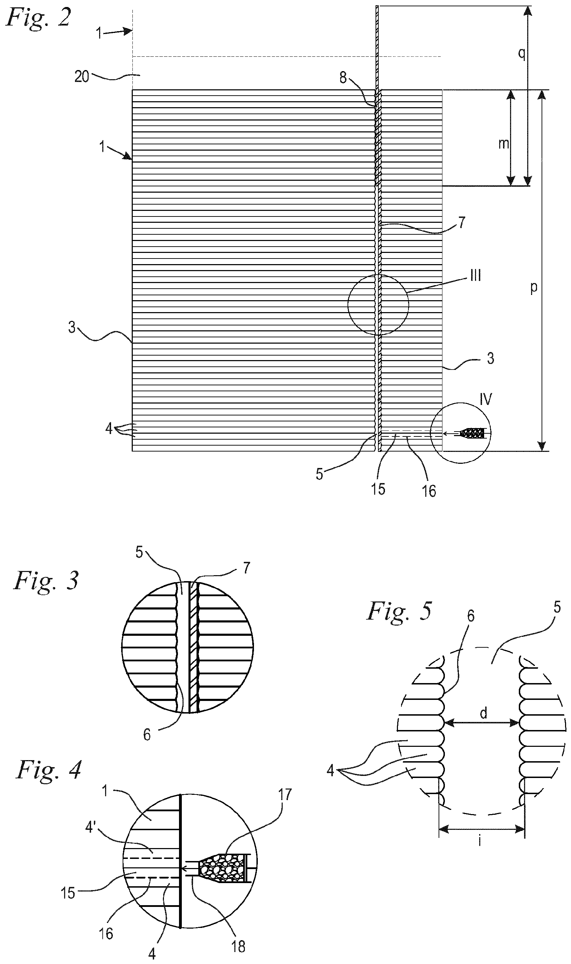

Fig. 2 zeigt die Wand 1 nach der Montage eines ersten Bewehrungsstabs 7 im Kanal 5. Im Ausführungsbeispiel besitzt der Bewehrungsstab 7 eine Länge p, die näherungsweise der Höhe a (Fig. 1) der Wand 1 entspricht. Der Bewehrungsstab 7 ragt dadurch nicht an der Oberseite der Wand 1 über die Wand 1 hinaus. An der Oberseite der Wand 1 ist in Fig. 2 schematisch mit gestrichelter Linie eine an der Oberseite der Wand 1 angeordnete Deckenplatte 20 und darüber eine weitere Wand 1 dargestellt. Für die oberhalb der Deckenplatte 20 angeordnete Wand 1 ist vorgesehen, einen zweiten Bewehrungsstab 8 im Kanal 5 anzuordnen. Die beiden Bewehrungsstäbe 7 und 8 bilden einen Überlappungsstoß. Der Bewehrungsstab 8 weist eine Länge q auf. Die Länge q kann genau so groß wie die Länge p oder größer oder kleiner als diese sein. Die Bewehrungsstäbe 7 und 8 überlappen sich mit ihren Enden über eine Überlappungslänge m. Dabei überlappen sich das obere Ende des Bewehrungsstabs 7 und das untere Ende des Bewehrungsstabs 8.

Wie Fig. 2 zeigt, weist die Wand 1 im unteren Bereich eine Verbindung 15 auf, die den Innenraum des Kanals 5 mit der Außenseite der Wand 1 verbindet. Im Ausführungsbeispiel mündet die Verbindung 15 an einer Querseite 3 der Wand 1. Im Ausführungsbeispiel ist die Verbindung 15 in einem Rohr 16 ausgebildet, das zwischen einer Schicht 4 und einer unmittelbar darüber liegenden Schicht 4' der Wand 1 eingebettet ist. Über die Verbindung 15 kann Verfüllmaterial 17 in den Kanal 5 eingepresst werden, wie Fig. 4 zeigt. Wie Fig. 4 zeigt, wird das Verfüllmaterial 17 über eine schematisch dargestellte Zuführdüse 18 durch das Rohr 16 und in den Kanal 5 zugeführt. Die Verbindung 15 kann auch durch einen in die Wand 1 gebohrten Kanal gebildet sein oder durch einen Bereich gebildet sein, zu dem beim Auftragen der Schichten 4 in mindestens einer Schicht 4 kein Beton zugeführt wird. Auch andere Möglichkeiten zur Herstellung des Kanals 4 können vorteilhaft sein.

Fig. 3 zeigt die Anordnung des Bewehrungsstabs 7 im Kanal 5. Wie Fig. 3 zeigt, ist zwischen dem Bewehrungsstab 7 und der Wandung 6 des Kanals 5 ein Zwischenraum gebildet, der von dem Verfüllmaterial 17 ausgefüllt ist. Die Verbindung 16 ist im Ausführungsbeispiel zwischen der dritten Schicht 4 und der vierten Schicht 4' angeordnet. Bevorzugt ist die Verbindung 15 unterhalb der zehnten Schicht 4 der Wand 1, bevorzugt unterhalb der vierten Schicht 4 der Wand 1 angeordnet. Dadurch kann sichergestellt werden, dass auch der von der Mündungsöffnung der Verbindung 15 nach unten ragende Abschnitt des Kanals 5 von dem Verfüllmaterial 17 vollständig gefüllt werden kann. Dadurch, dass das Verfüllmaterial 17 überwiegend von unten in den Kanal 5 eingefüllt wird, kann auf einfache Weise sichergestellt werden, dass keine Luftblasen im Kanal 5 eingeschlossen werden.

Wie Fig. 5 zeigt, bilden die Schichten 4 einen wellenförmigen Verlauf der Wandung 6 des Kanals 5. Jede Schicht 4 ist im mittleren Bereich nach außen gewölbt. Der kleinste Durchmesser d des Kanals 5 ist im mittleren Bereich einer Schicht 4 gemessen. Ein größter Durchmesser i ist in dem Bereich gemessen, in dem zwei aufeinander folgende Schichten 4 aneinander liegen. Die Differenz der Durchmesser i und d beträgt vorteilhaft mindestens 1 mm, bevorzugt mindestens 2 mm. Die Welligkeit jeder Wandung beträgt demnach vorteilhaft mindestens 0,5 mm, insbesondere mindestens 1 mm. Aufgrund der Welligkeit der Wandung 6 wird eine gute Verzahnung des Verfüllmaterials 17 mit der Wandung 6 und dadurch eine gute Übertragung der von den Bewehrungsstäben 7 und 8 aufgenommenen Zugkräfte in die Schichten 4 ermöglicht.

Bei der Herstellung der Wand 1 werden zunächst mehrere Schichten 4 übereinander liegend hergestellt. Dabei bewegt sich die Betonaustrittsöffnung 13 (Fig. 1) in Auftragsrichtung 10 und/oder Auftragsrichtung 11 über den Boden oder eine bereits hergestellte Schicht 4 und trägt dabei Beton auf. Im Bereich des Kanals 5 wird kein Beton aufgetragen. In gleicher Weise werden weitere Schichten 4 über die erste Schicht 4 aufgetragen, wobei der Beton im Bereich des Kanals 5 jeweils so ausgespart wird, dass ein durchgehender, bevorzugt vertikaler Kanal entsteht. Im Ausführungsbeispiel wird nach dem Auftragen der dritten Schicht 4 das Rohr 16 auf die dritte Schicht 4 aufgelegt und teilweise, insbesondere bis zur Hälfte in die dritte Schicht 4 eingedrückt. Es kann auch vorgesehen sein, in dem Bereich, in dem das Rohr 16 angeordnet werden soll, weniger Beton zur Schicht 4 zuzuführen. Nachdem das Rohr 16 eingelegt wurde, wird die Schicht 4' aufgetragen. Dadurch ist das Rohr 16 über seinen gesamten Umfang von Beton umschlossen. Das Rohr 16 wird vorteilhaft unterhalb der zehnten Schicht 4, insbesondere unterhalb der vierten Schicht 4 eingelegt. Nach Erstellung zumindest eines Teilabschnitts der Wand 1 wird in dem Kanal 5 ein Bewehrungsstab 7 angeordnet. Die Höhe des Teilabschnitts der Wand 1 entspricht vorzugsweise mindestens der Länge p des Bewehrungsstabs 7, so dass der Bewehrungsstab 7 nicht an der Oberseite der Wand 1 über die oberste Schicht 4 hervorragt.

Ist nach der Montage des Bewehrungsstabs 7 die Gesamthöhe der Wand 1 noch nicht erreicht, so werden weitere Schichten 4 aufgetragen. Nach Herstellung eines weiteren Teilabschnitts der Wand 1 oder nach Fertigstellung der Wand 1 können ein oder mehrere weitere Bewehrungsstäbe 8 in dem Kanal 5 angeordnet werden. Aufgrund der Abmessungen des Kanals 5 verkanten die Bewehrungsstäbe 7, 8 in dem Kanal 5, so dass die Bewehrungsstäbe 7, 8 nicht ungewollt im Kanal 5 verrutschen können. Sind alle Bewehrungsstäbe 7, 8 mit der gewünschten Überlappung im Kanal 5 angeordnet, so wird Verfüllmaterial 17 über das Rohr 16 in den Kanal 5 gedrückt, bis der Kanal 15 vollständig von Verfüllmaterial 17 ausgefüllt ist. Alternativ wird der untere Bewehrungsstab 7 im Kanal angeordnet und der Kanal 5 bis auf eine Höhe, die um die Überlappungslänge m kleiner als die Länge p des Bewehrungsstabs 7 ist, mit Verfüllmaterial 17 verfüllt. Anschließend wird die Deckenplatte 20 angeordnet und es werden weitere Schichten 4 zur Erstellung der oberhalb der Deckenplatte 20 verlaufenden Wand 1 aufgetragen. Wenn die Höhe der Wand 1 der Länge q des Bewehrungsstabs 8 abzüglich der Überlappungslänge m abzüglich der Dicke der Deckenplatte 20 entspricht, wird der Bewehrungsstab 8 in dem Kanal 5 angeordnet und der Kanal 5 wird weiter mit Verfüllmaterial 17 verfüllt, insbesondere über eine weitere Verbindung 13. Die weitere Verbindung 13 liegt vorteilhaft höchstens um weniger als zehn Schichten 4, bevorzugt um weniger als vier Schichten 4 oberhalb des unteren Endes des Bewehrungsstabs 8.

Im Ausführungsbeispiel ist das Verfüllmaterial 17 Mörtel. Das Verfüllmaterial 17 besitzt vorteilhaft eine höhere Festigkeit als der Beton 4. Besonders bevorzugt ist das Verfüllmaterial 17 Mörtel mit einer Festigkeitsklasse von mindestens C60, insbesondere mindestens C75. Der kleinste Durchmesser d des Kanals 5 beträgt vorzugsweise mindestens 50 mm. Der Durchmesser d ist vorteilhaft auf den Durchmesser c der Bewehrungsstäbe 7, 8 (Fig. 1) und den Größtkorndurchmesser des Verfüllmaterials 17 abgestimmt. Bevorzugt beträgt der kleinste Durchmesser d des Kanals 5 mindestens die Summe aus zehnfachem Größtkorndurchmesser des Verfüllmaterials 17 und dem doppelten Durchmesser eines Bewehrungsstabs 7, 8. Dadurch ist sichergestellt, dass selbst im Überlappungsbereich ausreichend Bauraum für den Durchtritt des Größtkorns des Verfüllmaterials 17 ist.

Anstatt in einen Kanal 5 können die Bewehrungen 7, 8 auch auf andere Weise nachträglich in die Wand 1 eingebracht werden. Beispielsweise können die Bewehrungsstäbe in den nur teilweise erstarrten Beton der Schichten 4 eingedrückt oder eingeschraubt werden.

Es kann auch vorgesehen sein, dass die Bewehrungsstäbe 7, 8 als Spannbewehrungen ausgebildet sind.

Vorteilhaft sind die Bewehrungsstäbe 7 und 8 lediglich über das Verfüllmaterial 17 mit dem Beton der Wand 1 verbunden. Vorzugsweise sind keine Steckbügel zur Verankerung des Bewehrungsstabs 7, 8 und keine Bewehrungsmatten vorgesehen, da diese Elemente die Auftragung der Schichten 4 mittels 3D-Druckverfahren behindern würden oder einen aufwändigen, gabelförmig gestalteten Druckkopf bedingen, der den Beton an beiden Seiten einer Bewehrungsmatte zuführen kann.

## Patentansprüche

1. Verfahren zur Herstellung einer Wand eines Bauwerks aus Beton, wobei die Wand (1) durch Auftragen von Beton in übereinanderliegenden Schichten (4) ohne seitliche Schalung hergestellt wird, wobei in die Wand (1) zumindest ein Bewehrungsstab (7, 8) eingebracht wird, der zumindest einen Teil der Schichten (4) durchragt, wobei dieser Teil der Schichten (4) beim Einbringen des Bewehrungsstabs (7, 8) zumindest teilweise erstarrt ist, wobei übereinanderliegende Bereiche übereinander liegender Schichten (4) der Wand (1) beim Auftragen des Betons derart ausgespart werden, dass ein die Schichten (4) durchragender Kanal (5) entsteht, und wobei nach der Herstellung zumindest eines Teilabschnitts der Wand (1) zumindest ein Bewehrungsstab (7, 8) in den Kanal (5) eingebracht und der zwischen der Wandung (6) des Kanals (5) und dem mindestens einen Bewehrungsstab (7, 8) gebildete freie Querschnitt mit Verfüllmaterial (17) verfüllt wird,
wobei sich die Schichten (4) über mindestens die Hälfte der Länge (g) der Wand (1) von einer Längsseite (2) der Wand (1) zur gegenüberliegenden Längsseite (2) der Wand (1) erstrecken und wobei
als Verfüllmaterial (17) ein anderes Material verwendet wird als für die Herstellung der Schichten (4) der Wand (1), wobei das Verfüllmaterial (17) Mörtel ist.

2. Verfahren nach Anspruch 1,
**dadurch gekennzeichnet, dass** der Bewehrungsstab (7, 8) in einem Winkel von weniger als 30°, insbesondere von weniger als 10° zur Vertikalen, vorzugsweise vertikal eingebracht wird.

3. Verfahren nach Anspruch 1 oder 2,
**dadurch gekennzeichnet, dass** jede Schicht (4) mit einer Dicke (r) von 2 cm bis 10 cm hergestellt wird.

4. Verfahren nach einem der Ansprüche 1 bis 3,
**dadurch gekennzeichnet, dass** eine Verbindung (15) von dem Kanal (5) zur Außenseite der Wand (1) hergestellt wird und über die Verbindung (15) das Verfüllmaterial (17) in den Kanal (5) gepresst wird.

5. Verfahren nach Anspruch 4,
**dadurch gekennzeichnet, dass** die Verbindung (15) in dem Bereich unterhalb der zehnten Schicht (4) der Wand (1) hergestellt wird.

6. Verfahren nach Anspruch 4 oder 5,
**dadurch gekennzeichnet, dass** zur Herstellung der Verbindung (15) bei der Herstellung der Wand (1) ein von dem Kanal (5) zur Außenseite der Wand (1) führendes Rohr (16) teilweise in eine Schicht (4) eingedrückt und anschließend eine weitere Schicht (4') aufgebracht wird, die das Rohr (16) zumindest teilweise bedeckt.

7. Wand eines Bauwerks aus Beton, wobei die Wand (1) aus übereinander angeordneten Schichten (4) von Beton aufgebaut ist,
wobei in der Wand (1) mindestens ein Kanal (5) verläuft, der mehrere Schichten (4) durchquert und in dem zumindest ein Bewehrungsstab (7, 8) angeordnet ist, wobei der Kanal (5) mit Verfüllmaterial (17) gefüllt ist,
wobei sich die Schichten (4) über mindestens die Hälfte der Länge (g) der Wand (1) von einer Längsseite (2) der Wand (1) zur gegenüberliegenden Längsseite (2) der Wand (1) erstrecken und wobei die Zusammensetzung des Verfüllmaterials (17) sich von der Zusammensetzung des Betons der Schichten (4) unterscheidet, wobei das Verfüllmaterial (17) Mörtel ist.

8. Wand nach Anspruch 7,
**dadurch gekennzeichnet, dass** das Material des Verfüllmaterials (17) eine höhere Festigkeit aufweist als der Beton der Schichten (4).

9. Wand nach Anspruch 8,
**dadurch gekennzeichnet, dass** das Verfüllmaterial (17) mindestens die Festigkeitsklasse C60 aufweist.

10. Wand nach einem der Ansprüche 7 bis 9,
**dadurch gekennzeichnet, dass** in dem Kanal (5) mindestens zwei Bewehrungsstäbe (7, 8) angeordnet sind, die sich in Höhenrichtung der Wand (1) über einen Teilabschnitt (19) ihrer Länge (p, q) überlappen.

11. Wand nach einem der Ansprüche 7 bis 10,
**dadurch gekennzeichnet, dass** die Erstreckung des Kanals (5) in Längsrichtung (9) der Wand (1) kleiner als das Doppelte der Erstreckung des Kanals (5) in Querrichtung (21) der Wand (1) ist.

## Claims

1. Method for producing a wall of a construction made of concrete, wherein the wall (1) is produced by application of concrete in superposed layers (4) without lateral formwork, wherein at least one reinforced bar (7, 8) which passes through at least one part of the layers (4) is introduced into the wall (1), wherein this part of the layers (4) has been at least partially solidified when the reinforced bar (7, 8) is introduced, wherein, during the application of the concrete, superposed regions of superposed layers (4) of the wall (1) are left out in such a way that a channel (5) passing through the layers (4) is produced, and wherein, after at least a subportion of the wall (1) has been produced, at least one reinforced bar (7, 8) is introduced into the channel (5) and the free cross section formed between the wall (6) of the channel (5) and the at least one reinforced bar (7, 8) is filled with fill material (17),
wherein the layers (4) extend over at least half the length (g) of the wall (1) from one longitudinal side (2) of the wall (1) to the opposite longitudinal side (2) of the wall (1), and wherein the fill material (17) used is a material other than that used for the production of the layers (4) of the wall (1), wherein the fill material (17) is mortar.

2. Method according to Claim 1,
**characterized in that** the reinforced bar (7, 8) is introduced at an angle of less than 30°, in particular of less than 10°, with respect to the vertical, preferably vertically.

3. Method according to Claim 1 or 2,
**characterized in that** each layer (4) is produced with a thickness (r) of 2 cm to 10 cm.

4. Method according to one of Claims 1 to 3,
**characterized in that** a connection (15) from the channel (5) to the outer side of the wall (1) is produced and the fill material (17) is pressed into the channel (5) via the connection (15).

5. Method according to Claim 4,
**characterized in that** the connection (15) is produced in the region below the tenth layer (4) of the wall (1).

6. Method according to Claim 4 or 5,
**characterized in that**, in order to produce the connection (15), during the production of the wall (1) a pipe (16) leading from the channel (5) to the outer side of the wall (1) is pushed partially into a layer (4), and a further layer (4') which at least partially covers the pipe (16) is subsequently applied.

7. Wall of a construction made of concrete, wherein the wall (1) is constructed from layers (4) of concrete which are arranged on top of one another, wherein at least one channel (5) which passes through a plurality of layers (4) and in which at least one reinforced bar (7, 8) is arranged runs in the wall (1), wherein the channel (5) is filled with fill material (17),
wherein the layers (4) extend over at least half the length (g) of the wall (1) from one longitudinal side (2) of the wall (1) to the opposite longitudinal side (2) of the wall (1), and wherein the composition of the fill material (17) differs from the composition of the concrete of the layers (4), wherein the fill material (17) is mortar.

8. Wall according to Claim 7,
**characterized in that** the material of the fill material (17) has a higher strength than the concrete of the layers (4).

9. Wall according to Claim 8,
**characterized in that** the fill material (17) has at least the strength class C60.

10. Wall according to one of Claims 7 to 9,
**characterized in that** at least two reinforced bars (7, 8) which overlap in a height direction of the wall (1) over a subportion (19) of their length (p, q) are arranged in the channel (5).

11. Wall according to one of Claims 7 to 10,
**characterized in that** the extent of the channel (5) in a longitudinal direction (9) of the wall (1) is smaller than twice the extent of the channel (5) in a transverse direction (21) of the wall (1).

## Revendications

1. Procédé de fabrication d'un mur d'une construction en béton, le mur (1) étant fabriqué par application de béton en couches superposées (4) sans coffrage latéral, au moins une barre d'armature (7, 8) étant introduite dans le mur (1), qui traverse au moins une partie des couches (4), cette partie des couches (4) étant au moins partiellement solidifiée lors de l'introduction de la barre d'armature (7, 8), des zones superposées de couches superposées (4) du mur (1) étant réservées lors de l'application du béton de telle sorte qu'un canal (5) traversant les couches (4) se forme, et au moins une barre d'armature (7, 8) étant introduite dans le canal (5) après la fabrication d'au moins une section partielle du mur (1), et la section transversale libre formée entre la paroi (6) du canal (5) et l'au moins une barre d'armature (7, 8) est remplie avec un matériau de remplissage (17),
les couches (4) s'étendant sur au moins la moitié de la longueur (g) du mur (1) depuis un côté longitudinal (2) du mur (1) jusqu'au côté longitudinal opposé (2) du mur (1), et un autre matériau que pour la fabrication des couches (4) du mur (1) étant utilisé en tant que matériau de remplissage (17), le matériau de remplissage (17) étant du mortier.

2. Procédé selon la revendication 1,
**caractérisé en ce que** la barre d'armature (7, 8) est introduite à un angle de moins de 30°, notamment de moins de 10° par rapport à la verticale, de préférence à la verticale.

3. Procédé selon la revendication 1 ou 2,
**caractérisé en ce que** chaque couche (4) est fabriquée avec une épaisseur (r) de 2 cm à 10 cm.

4. Procédé selon l'une quelconque des revendications 1 à 3,
**caractérisé en ce qu'**une liaison (15) du canal (5) jusqu'au côté extérieur du mur (1) est fabriquée et le matériau de remplissage (17) est pressé dans le canal (5) par l'intermédiaire de la liaison (15).

5. Procédé selon la revendication 4,
**caractérisé en ce que** la liaison (15) est fabriquée dans la zone en dessous de la dixième couche (4) du mur (1).

6. Procédé selon la revendication 4 ou 5,
**caractérisé en ce que**, pour la fabrication de la liaison (15), un tube (16) conduisant depuis le canal (5) jusqu'au côté extérieur du mur (1) est enfoncé partiellement dans une couche (4) lors de la fabrication du mur (1), et une couche supplémentaire (4') est ensuite appliquée, qui recouvre au moins partiellement le tube (16).

7. Mur d'une construction en béton, le mur (1) étant formé de couches superposées (4) de béton,
au moins un canal (5) s'étendant dans la paroi (1), qui traverse plusieurs couches (4) et dans lequel au moins une barre d'armature (7, 8) est agencée, le canal (5) étant rempli avec un matériau de remplissage (17),
les couches (4) s'étendant sur au moins la moitié de la longueur (g) du mur (1) depuis un côté longitudinal (2) du mur (1) jusqu'au côté longitudinal opposé (2) du mur (1), et la composition du matériau de remplissage (17) différant de la composition du béton des couches (4), le matériau de remplissage (17) étant du mortier.

8. Mur selon la revendication 7,
**caractérisé en ce que** le matériau du matériau de remplissage (17) présente une résistance plus élevée que le béton des couches (4).

9. Mur selon la revendication 8,
**caractérisé en ce que** le matériau de remplissage (17) présente au moins la classe de résistance C60.

10. Mur selon l'une quelconque des revendications 7 à 9,
**caractérisé en ce qu'**au moins deux barres d'armature (7, 8) sont agencées dans le canal (5), qui se chevauchent dans la direction de hauteur du mur (1) sur une section partielle (19) de leur longueur (p, q).

11. Mur selon l'une quelconque des revendications 7 à 10,
**caractérisé en ce que** l'étendue du canal (5) dans la direction longitudinale (9) du mur (1) est inférieure au double de l'étendue du canal (5) dans la direction transversale (21) du mur (1).
